# EUROPÄISCHE PATENTANMELDUNG

(11) **EP 0 729 039 A2**
(43) Veröffentlichungstag der Anmeldung: **28.08.1996**
(21) Anmeldenummer: 96101133.5
(22) Anmeldetag: 26.01.1996
(51) Int. Cl.: G01V 3/12

(54) **Verfahren und Schaltungsvorrichtung zur elektromagnetischen Detektion von Objekten**

(30) Priorität: 23.02.1995 DE 19506339
(71) Anmelder: Ebinger, Klaus, D-51149 Köln (DE)
(72) Erfinder: Ebinger, Klaus, Ing., D-51143 Köln (DE); Günnewig, Augustinus, D-50733 Köln (DE)
(74) Vertreter: Heim, Hans-Karl, Dipl.-Ing.

(57) **Zusammenfassung**

Die Erfindung betrifft ein Verfahren und eine Schaltungsvorrichtung zur elektromagnetischen Detektion von Objekten mittels Auswertung des von den Objekten abgestrahlten Sekundärsignals. Dabei wird ein Einzelimpuls ausgestrahlt und das vom zu detektierenden Objekt abgestrahlte Sekundärsignal empfangen und objektspezifisch ausgewertet. Dies geschieht durch Abtastung des Sekundärsignals und Verknüpfung der einzelnen Signale, wobei durch Teilverknüpfungen eine objektspezifische Information ermittelt wird.

## Beschreibung

Die Erfindung betrifft ein Verfahren und eine Schaltungsvorrichtung zur elektromagnetischen Detektion von Objekten im Rahmen der Puls-Induktion-Technik (PI-Technik).

Aus der DE 43 26 030 A1 ist ein Verfahren der eingangs genannten Art bekannt, bei dem Einzelimpulse in den Bereich eines zu detektierenden Objekts gesendet werden und ein vom Objekt abgestrahltes Sekundärsignal empfangen und objektspezifisch ausgewertet wird. Dabei werden insbesondere die Frequenzanteile des Sekundärsignals zur Spezifizierung des Objekts verwendet.

Ferner ist ein Verfahren zur elektromagnetischen Detektion von Objekten bekannt, welches mit bipolaren Impulsen arbeitet. Dabei wird in dem Antwortsignal des ersten Impulses eine frühe Messung vorgenommen und in dem Antwortsignal des zweiten Impulses eine späte Messung vorgenommen. Auch mit diesem Verfahren ist eine vollständige Signalauswertung und eine umfassende Objektidentifikation nicht möglich.

Ausgehend von diesem Stand der Technik liegt daher der Erfindung die **Aufgabe** zugrunde, ein Verfahren und eine Schaltungsvorrichtung zu schaffen, welche bzw. welches eine besonders gute Auswertung der Signalinformation gewährleistet und zu einer möglichst weitgehenden Objektspezifizierung führt.

Die Lösung dieser Aufgabe erfolgt verfahrensmäßig gemäß den Merkmalen des Anspruchs 1 und schaltungsvorrichtungsmäßig gemäß den kennzeichnenden Merkmalen des Anspruchs 11. Vorteilhafte Weiterbildungen sind in den abhängigen Ansprüchen beschrieben.

Entsprechend einem wesentlichen Grundgedanken der Erfindung wird ein einzelner Impuls ausgestrahlt, der in einem Objekt, welches leitfähige und/oder dielektrische Eigenschaften aufweist, einen Wirbelstrom erzeugt, durch den wiederum ein Sekundärsignal abgestrahlt wird. Dieses Sekundärsignal wird empfangen und objektspezifisch ausgewertet. Dazu wird das Sekundärsignal zu vorgebbaren Zeiten abgetastet und die abgetasteten Signale durch eine schaltungstechnische Verknüpfung weiterverarbeitet. Durch eine entsprechende Verknüpfung und Weiterverarbeitung von Teilverknüpfungen erhält man eine Information über Form und Gestalt des Sekundärsignals, woraus objektspezifische Informationen abgeleitet werden können.

Vorteilhaft ist die Speicherung der Abtastwerte, so daß diese anschließend gemeinsam ausgewertet werden können. Genausogut ist es möglich, jeden einzelnen Abtastwert der Verknüpfung zuzuführen und dort zwischenzuspeichern und das jeweils zwischengespeicherte Ergebnis dann mit dem nächsten gemessenen Abtastwert weiterzuverarbeiten. Bei der Auswertung der Abtastwerte werden bevorzugt Addition und Subtraktion durchgeführt. Addiert man sämtliche Abtastsignale zu einem Wert auf, so erhält man als Summe der einzelnen Abtastwerte ein wesentlich stärkeres Ortungssignal, als es bei Verwendung nur eines Meßwertes möglich wäre. Dies kann eine Empfindlichkeitssteigerung von 30 % bis 40 % bedeuten.

In einer bevorzugten Weiterbildung der Erfindung wird ein Teil der Abtastwerte zu einer ersten Summe aufaddiert und ein weiterer Teil der Abtastwerte zu einer zweiten Summe aufaddiert, und aus diesen beiden Summen ein Differenzsignal gebildet. Allgemeiner ausgedrückt, kann man beliebig viele Abtastwerte 1 bis N messen und hintereinander reihen. Werden die Werte der einzelnen Abtastwerte 1 bis N durch entsprechende elektronische Mittel und durch einen vorgegebenen zeitlichen Ablauf miteinander verglichen, so erhält man Objektinformationen hinsichtlich Größe und Materialbeschaffenheit, die sich aus den unterschiedlichen Abklingfunktionen der Sekundärsignale ergeben. Die Kombination der Abtastwerte 1 bis N kann beliebig untereinander verknüpft werden, um auf diese Weise dem entsprechenden Zweck optimal angepaßt zu werden. Es kann daher abhängig vom Zweck eine beliebige Folge der Abtastwerte, z.B. 1, 4, 2, 6, 8 usw. verknüpft werden.

Dabei ist es besonders bevorzugt, die aufzusummierenden Abtastwerte so auszuwählen, daß eine Bodenkompensation automatisch durchgeführt wird. Dazu müssen zwei Gruppen von Abtastwerten ausgewählt werden, die in Abwesenheit eines zu suchenden Objekts bodenspezifisch die gleiche Summe der Einzelwerte ergeben. Die Differenz der beiden Gruppen ergibt also Null, solange kein Objekt das empfangene Sekundärsignal verändert und dadurch ein von Null abweichendes Ergebnis hervorruft.

Das Verfahren kann mit Monoeinzelimpulsen durchgeführt werden. Bevorzugt sind jedoch bipolare Einzelimpulse. Hier kann jeder einzelne Impuls nach seiner Abklingzeit bevorzugt mit einem Sampling- oder Multiplexverfahren abgetastet werden. Es ist auch möglich, die Werte der einzelnen Impulskanäle in Relation zu bringen, vor allem dann, wenn die abtastenden Samplingimpulse für jeden Kanal des bipolaren Einzelimpulses unterschiedliche Werte aufweisen. Hierdurch ergibt sich wiederum eine Differenz in den beiden bipolaren Kanälen, die wiederum miteinander verglichen werden kann.

Um ein kontinuierliches Verfahren zu erhalten, werden die Einzelimpulse nach einer kurzen Zeitspanne erneut ausgestrahlt. Dabei kann bevorzugterweise eine Frequenz von 10 Hz bis etwa 10 KHz Verwendung finden.

Bevorzugt ist weiterhin die Auswertung mit digitalen Techniken und Mikroprozessoren, um die Vielfalt der gegebenen Meßmöglichkeiten ausnutzen zu können.

Das erfindungsgemäße Verfahren führt zu einer höheren Reichweite durch die Aufsummierung vieler einzelner Abtastsignale. Gleichzeitig wird eine Intensitätssteigerung von ca. bis zu 40 % erreicht.

Durch Untersuchung, Vergleich und Verknüpfung der einzelnen Abtastwerte kann man die Objektzeitkonstante erkennen, die auch ein Maß für die Dimension des Objekts ist. Wenn man diese Zeitkonstante mit der Gesamtintensität aller aufsummierten Abtastsignale vergleicht, so kann man auch auf die Ortungstiefe des Objekts schließen.

Das Verfahren und die Schaltungsvorrichtung können mit beliebigen Schleifenkonfigurationen, wie z.B. Relativ- oder Differenzmessern, realisiert werden. Auch die Anwendung in einem Bewehrungssuchgerät mit Tiefenanzeige und Identifizierung des Stabdurchmessers ist möglich.

Nachfolgend wir die Erfindung anhand einer Zeichnung weiter erläutert. Im einzelnen zeigen die schematischen Darstellungen in:
- Fig. 1: eine Darstellung zur prinzipiellen Funktion des Impulsverfahrens;
- Fig. 2: eine schematische Schaltungsskizze der erfindungsgemäßen Vorrichtung zur Durchführung des Verfahrens;
- Fig. 3: eine prinzipielle Darstellung der Flächenauswertung.

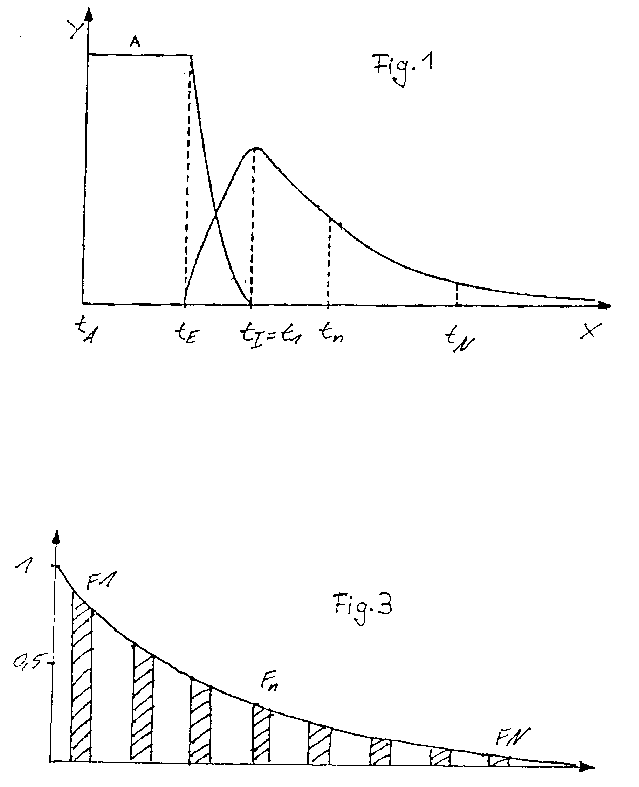

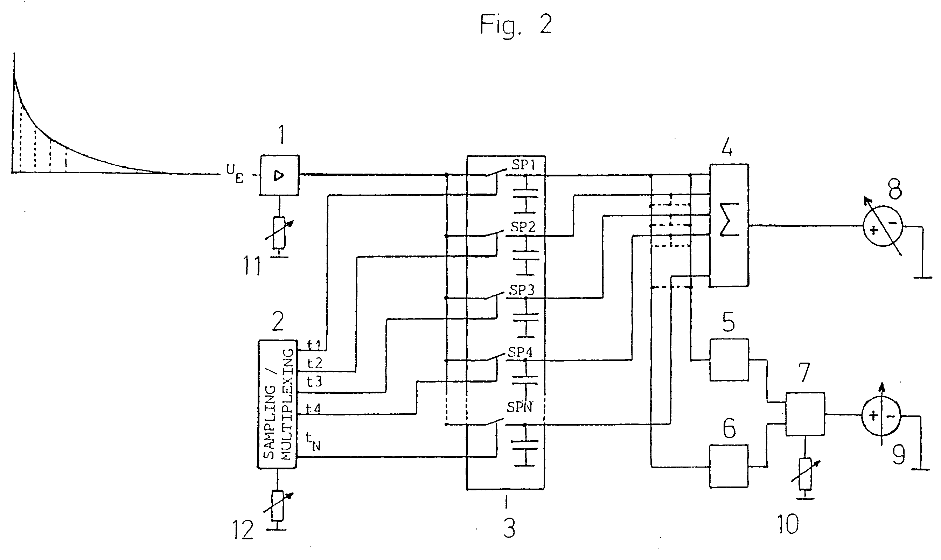

In Fig. 1 ist die prinzipielle Funktion des Verfahrens dargestellt. Kurze Einzelimpulse, die von einer Sendeschleife ausgesandt werden, induzieren in den gesuchten Metallgegenständen Wirbelströme. Diese Wirbelströme bewirken ein Sekundärfeld, das ein objektspezifisches Abklingverhalten hat. Der zeitliche Verlauf des so erzeugten magnetischen Echos ist von der Größe und Materialbeschaffenheit des aufgespürten Metallgegenstandes abhängig. In Fig. 2 ist auf der x-Achse die Zeit und auf der y-Achse die Feldstärke dargestellt. Zum Zeitpunkt t_{A} wird durch die Such- oder Sendeschleife ein Gleichstrom geschickt, der sich impulsartig aufbaut und zum Zeitpunkt t_{E} abgeschaltet wird. Dieser Primärimpuls A klingt durch die Induktion der Schleife erst zum Zeitpunkt T_{I} auf Null ab. Das Sekundärfeld, also das magnetische Echo des Suchobjekts, hat etwa zu diesem Zeitpunkt sein Maximum erreicht und klingt dann mit objektspezifischer Halbwertszeit ab. Erfindungsgemäß wird dann zu den Zeitpunkten t1 bis tN durch die Sample- und Holdschaltung die objektspezifische Abklingkurve abgetastet.

In Fig. 2 ist ein Blockschaltbild einer Schaltungseinrichtung zur elektromagnetischen Detektion von Objekten dargestellt. Auf der linken Seite ist die Form des zu detektierenden Sekundärsignals angedeutet, welches exponentiell abfällt. Dieses wird über einen Eingangsverstärker 1 mit Nullkompensationsblock 11 in die Schaltung eingespeist. Diese Nullkompensation ist funktionsmäßig mit der Auswerteinrichtung 8 verbunden. Eine Zeitschaltung 2, deren Werte über den Block 12 einstellbar sind, schaltet die Analogschalter SP1 bis SPN im Block 3 zu den Zeitpunkten t1 bis tN. Der jeweilige Abtastwert wird in die zugehörigen Kondensator geladen. Ein Auswertkanal wird von einer Verknüpfungseinrichtung 4 gebildet, die eine Summe aus sämtlichen Abtastwerten 1 bis N bildet. Nach entsprechender elektronischer Aufbereitung kann dieses Signal in der Auswerteinrichtung 8, die von einem analogen Anzeigegerät gebildet wird, dargestellt werden. Dieser Anzeigekanal signalisiert die Anwesenheit des Suchobjekts. Durch das Aufsummieren der einzelnen Signalimpulse wird die effektive Signalspannung größer, wodurch die Intensität des Ortungssignals erheblich zunimmt.

In einem zweiten Anzeigekanal wird in den Verknüpfungseinrichtungen 5 und 6 jeweils ein Teil der N Werte aufaddiert, um in einer Verknüpfungseinrichtung 7 die Differenzspannung der in den Verknüpfungseinrichtungen 5 und 6 erhaltenen Spannungen zu ermitteln. Die Auswerteinrichtung 9, die z.B. von einem analogen Instrument mit Plus/Minus-Anzeige gebildet werden kann, soll beispielhaft darstellen, daß beispielweise Eisen eine negative und Nichteisen eine positive Anzeige auslösen kann. Der Grund ist der, daß das materialbedingte Abklingverhalten sehr unterschiedlich ist.

Das Verfahren gestattet nicht nur eine Metallunterscheidung, sondern auch eine Unterdrückung störender Medien. Dies kann z.B. der Boden sein, der magnetische Eigenschaften aufweisen kann. Auch magnetische Steine, Feuerstellen und andere magnetische Rückwirkungen können das Suchergebnis beeinflussen. Dieses Störsignale sind natürlich auf dem ersten Kanal bzw. auf der Auswerteinrichtung 8 immer im gewissen Maße vorhanden und können auch nur bedingt unterdrückt werden. Die Auswerteinrichtung 9, die durch die Verknüpfungseinrichtungen 5, 6 und 7 eine Objektanalyse durchführt, kann durch geeignete Wahl der Zeiten t1 bis tN so gesteuert werden, daß die Wirkung des störenden Mediums kompensiert wird. Dazu kann auch die Nullkompensation 10 genutzt werden. Die Wirkung ist die, daß die einzelnen Samplingpulse zeitlich so gesteuert werden, daß sich beim Vergleich in der Verknüpfungseinrichtung 7 die Summe Null ergibt. Auf diese Weise können Metallobjekte in hochmagnetischen Böden auch dann noch geortet werden, wenn die Auswerteinrichtung 8 bereits voll durchgesteuert ist.

Daraus ergibt sich auch die Funktion des sogenannten Diskriminierens, wobei die Geräteeinstellung so erfolgt, daß bestimmte, ungewollte Objekte keine Anzeige auslösen. Der Vorgang entspricht der Bodenkompensation.

Eine Alternative zur Abtastung einzelner Amplitudenwerte besteht in der Auswertung der Fläche unter der Abklingfunktion. Dies ist schematisch in Fig. 3 dargestellt. Ausgehend von einem normierten Anfangswert, weist jedes Objekt abhängig von Größe und Beschaffenheit eine typische Abklingfunktion auf, die durch die Fläche unter der Kurve charakterisiert ist und mittels eines Integrators gemessen werden kann. Bezogen auf ein ferromagnetisches Objekt weist ein größeres Objekt ein größeres Integral unter der Abklingkurve auf. Vorteilhafterweise werden erfindungsgemäß Teilflächen F1 bis FN ermittelt und die Einzelflächen miteinander verknüpft und ausgewertet. Im wesentlichen besteht diese Alternative darin, daß man sich auf einen normierten Amplitudenwert 1 bezieht und durch absampeln feststellt, wann die Kurve den Amplitudenwert 0,5 erreicht. Auch hier ergibt sich ein klar definiertes Abklingverhalten. Hier reichen bereits zwei Samplingimpulse aus, um festzustellen, ob die objektspezifische Fläche größer oder kleiner als die Vergleichsfläche ist.

## Patentansprüche

1. Verfahren zur elektromagnetischen Detektion von Objekten,
a) wobei ein Einzelimpuls ausgestrahlt wird, der das zu detektierende Objekt zur Abstrahlung eines Sekundärsignals anregt,
b) und das Sekundärsignal empfangen und objektspezifisch ausgewertet wird,
c) wobei aus dem empfangenen Sekundärsignal zu vorgebbaren Samplingzeiten Abtastsignale erzeugt werden,
d) wobei die Abtastsignale einer Verknüpfung unterzogen werden und
e) das oder die Verknüpfungssignale einer Auswertung und Anzeige objektspezifischer Daten zugeführt werden.

2. Verfahren nach Anspruch 1,
dadurch **gekennzeichnet**,
daß die Abtastwerte gespeichert und anschließend gemeinsam ausgewertet werden.

3. Verfahren nach einem der Ansprüche 1 oder 2,
dadurch **gekennzeichnet**,
daß die Auswertung durch Addition oder Subtraktion der Abtastwerte erfolgt.

4. Verfahren nach einem der vorhergehenden Ansprüche,
dadurch **gekennzeichnet**,
daß die Abtastwerte durch ein Sampling- oder ein Multiplex-Verfahren erzeugt werden.

5. Verfahren nach einem der vorhergehenden Ansprüche,
dadurch **gekennzeichnet**,
daß ein Teil der Abtastwerte zu einer ersten Summe aufaddiert wird,
daß ein weiterer Teil der Abtastwerte zu einer zweiten Summe aufaddiert wird und
daß aus den beiden Summen ein Differenzsignal gebildet wird.

6. Verfahren nach Anspruch 5,
dadurch **gekennzeichnet**,
daß die Auswahl der aufzusummierenden Abtastwerte in Abhängigkeit vom Untergrund erfolgt.

7. Verfahren nach einem der vorhergehenden Ansprüche,
dadurch **gekennzeichnet**,
daß sämtliche Abtastwerte aufaddiert werden.

8. Verfahren nach einem der vorhergehenden Ansprüche,
dadurch **gekennzeichnet**,
daß bipolare Einzelimpulse ausgestrahlt werden, und
daß die Einzelimpulse mit einer Frequenz von 10 Hz bis 10 KHz ausgestrahlt werden.

9. Verfahren nach einem der vorhergehenden Ansprüche,
dadurch **gekennzeichnet**,
daß die Auswertung digital und mikroprozessorgesteuert durchgeführt wird.

10. Verfahren nach einem der Ansprüche 1 bis 9,
dadurch **gekennzeichnet**,
daß die Verknüpfungssignale aus der Messung der Fläche oder von Teilflächen des Sekundärsignals, insbesondere der Flächenintegration unterhalb des Sekundärsignals, gewonnen werden.

11. Schaltungsvorrichtung zur elektromagnetischen Detekt von Objekten mittels Auswertung des von den Objekten abgestrahlten Sekundärsignals, mit einer Sende-, einer Empfangs- und einer Auswerteinrichtung, insbesondere zur Durchführung des Verfahrens nach einem der Ansprüche 1 bis 10,
dadurch **gekennzeichnet**,
daß die Empfangseinrichtung eine Sample- und Holdeinrichtung (3) zur Abtastung und Speicherung von Abtastsignalen des Sekundärsignals aufweist,
daß eine ein- oder mehrkanalige Verknüpfungseinrichtung (4, 5, 6, 7) für die Abtastsignale vorgesehen ist und daß der Verknüpfungseinrichtung eine Auswerteinrichtung (8, 9) nachgeschaltet ist.

12. Schaltungsvorrichtung nach Anspruch 11,
dadurch **gekennzeichnet**,
daß ein Eingangsverstärker (1) in die Empfangseinrichtung integriert ist, und
daß die Sample- und Holdeinrichtung (3) Analogschalter und Kondensatoren aufweist.

13. Schaltungsvorrichtung nach einem der Ansprüche 11 oder 12,
dadurch **gekennzeichnet**,
daß die Verknüpfungseinrichtung (4, 5, 6, 7) als Addierer oder Subtrahierer ausgebildet ist.

14. Schaltungsvorrichtung nach einem der Ansprüche 11 bis 13,
dadurch **gekennzeichnet**,
daß die Verknüpfungseinrichtung (7) mit einer Nullkompensation (10) verbunden ist.

15. Schaltungsvorrichtung nach einem der Ansprüche 11 bis 14,
dadurch **gekennzeichnet**,
daß die Auswerteinrichtung (8, 9) als analoges Anzeigeinstrument mit Plus/Minus-Anzeige ausgebildet ist.

16. Schaltungsvorrichtung nach einem der Ansprüche 11 bis 15,
dadurch **gekennzeichnet**,
daß die Sample- und Holdeinrichtung (3) einen Integrator zur Messung von Flächen oder Teilflächen des Sekundärsignals aufweist.
